# EUROPÄISCHE PATENTSCHRIFT

(11) **EP 3 462 040 B1**
(45) Veröffentlichungstag und Bekanntmachung des Hinweises auf die Patenterteilung: **24.01.2024**
(21) Anmeldenummer: 18179268.0
(22) Anmeldetag: 22.06.2018
(51) Int. Cl.: F15B 13/044, F15B 21/08, F16K 11/07, F16K 31/06

(54) **VERFAHREN ZUR EINSTELLUNG EINES ARBEITSAGGREGATES**
METHOD FOR ADJUSTING A WORK UNIT
PROCÉDÉ DE RÉGLAGE D'UN GROUPE DE TRAVAIL

(30) Priorität: 13.09.2017 DE 102017121194
(43) Veröffentlichungstag der Anmeldung: 03.04.2019
(73) Patentinhaber: CLAAS Selbstfahrende Erntemaschinen GmbH, 33428 Harsewinkel (DE)
(72) Erfinder: Strieker, Norbert, 33415 Verl (DE); Wielenberg, Andreas, 32049 Herford (DE); Heitmann, Christoph, 48231 Warendorf (DE)
(74) Vertreter: CLAAS Gruppe

(56) Entgegenhaltungen:
- EP-A1- 2 848 112
- EP-A1- 3 000 301
- DE-A1- 4 221 757
- JP-A- H11 108 081
- US-A1- 2011 168 011
- US-A1- 2015 198 241

## Beschreibung

Die vorliegende Erfindung betrifft ein Einstellverfahren eines Arbeitsaggregates einer landwirtschaftlichen Arbeitsmaschine gemäß dem Oberbegriff des Anspruchs 1. Weiterhin betrifft die Erfindung eine Landwirtschaftliche Arbeitsmaschine ein einstellbares Arbeitsaggregat umfassend gemäß dem Anspruch 6.

Das Einstellen eines Arbeitsaggregates einer landschaftlichen Arbeitsmaschine erfolgt oftmals hydraulisch mittels eines Hubzylinders. Im Allgemeinen werden einfach wirkende Stellfunktionen in der Hydraulik durch ein 3/3-Wege Ventil angesteuert. Diese Ventile verfügen über zwei Steuermagnete, einen zum Ausfahren und einen weiteren zum Einfahren eines Hubzylinders. Sind beide Steuermagnete stromlos, wird eine zuletzt eingestellte Zylinderposition des Hubzylinders gehalten, wodurch Zwischenstellung ermöglicht werden, die zur Einstellung des Arbeitsaggregates verwendet werden.

Sind hingegen nur zwei feste Zylinderstellungen vorgesehen, reicht es aus, ein einfaches 3/2-Wege Ventil mit nur einem Steuermagneten zu verwenden. Ist der Steuermagnete bestromt, so fährt der Zylinder bis auf einen Anschlag aus. Ist der Steuermagnet stromlos, so fährt der Zylinder wieder ganz ein.

Aus der EP 0 898 872 B1 ist Mähdrescher mit einer Häckselvorrichtung bekannt, welche gehäckseltes Stroh einem Wurfgebläsepaar zur Verteilung auf dem Boden zuführt. Die beiden parallel nebeneinander angeordneten Wurfgebläse weisen jeweils einen Auswurfstutzen auf, die durch eine hydraulisch betätigte Schwenkeinheit miteinander verbunden sind. Im Betrieb der Schwenkeinheit werden die beiden Auswurfstutzen oszillierend hin- und herbewegt. Die Schwenkeinheit besteht aus einem doppelt wirkenden Hubzylinder, der beidseitig Druckmittelanschlüsse aufweist, welche jeweils mittels elektrisch ansteuerbarer 3/2-Wegeventile wechselweise druckbeaufschlagt werden, um eine pendelnde Bewegung der Auswurfstutzen darzustellen. Um in den Umkehrpunkten des Kolbens auftretende Druckspitzen zu kompensieren, wird den beiden 3/2-Wegeventile ein Druckbegrenzungsventil vorgeschaltet, welches nach der Umschaltung der 3/2-Wegeventile zur Erreichung eines linearen Druckanstieges mittels Pulsweitenmodulation angesteuert wird.

Aus der US 2015/0198241 A1 ist ein 3/2-Wegeventil mit einem Schieber und einem Steuermagneten bekannt, welches zum Ansteuern einer Kupplung zum Schalten von Gängen eines Getriebes dient. Hierzu wird der Schieber zwischen zwei Endstellungen hin und herbewegt. Nach einem Schaltvorgang ist der Schieber durch eine entsprechende Bestromung der Spule aufgrund einer Stromregelung in eine Zwischenstellung überführbar, in der alle Anschlüsse des 3/2-Wegeventils fluidleitend miteinander kommunizieren.

Die EP3000301 A1 zeigt einen selbstfahrenden Mähdrescher mit einem heckseitigen Austritt für ein Stroh-Spreu-Gemisch, dem eine aus wenigstens einer, insbesondere zwei, angetriebenen Schleudereinrichtungen bestehende Streueinrichtung nachgeordnet ist. Dabei ist an jeder der Streueinrichtungen, zur Lenkung des Gutstromes, eine aus zumindest zwei teleskopisch verstellbaren Streublechen bestehende radiale Teilummantelung angeordnet.

Somit liegt der Erfindung die Aufgabe zugrunde, ein Verfahren zur Einstellung eines Arbeitsaggregates sowie ein einstellbares Arbeitsaggregat bereitzustellen, welche sich durch eine einfachere Ansteuerung auszeichnen.

Dies wird erfindungsgemäß durch die Merkmale der Ansprüche 1 und 6 gelöst. Vorteilhafte Weiterbildungen sind Gegenstand der jeweiligen Unteransprüche.

Gemäß dem Anspruch 1 wird ein Verfahren zur Einstellung eines Arbeitsaggregates für eine landwirtschaftliche Arbeitsmaschine mittels eines Hubzylinders vorgeschlagen, der durch ein 3/2-Wegeventil mit einem Schieber und nur einem Steuermagneten angesteuert wird, wobei der Schieber durch Bestromung des nur einen Steuermagneten zwischen einer ersten Endstellung, in der ein Entlüftungsanschluss mit dem Arbeitsanschluss verbunden wird, und einer zweiten Endstellung, in der ein Druckanschluss mit einem Arbeitsanschluss verbunden wird, hinund herbewegt wird. Damit eine vorgenommene Einstellung des Arbeitsaggregates mittels eines 3/2-Wegeventils gehalten werden kann, wird vorgeschlagen, dass die Bestromung des Steuermagnet des 3/2-Wegeventils angesteuert wird, um den Schieber in eine Zwischenstellung zwischen der ersten Endstellung und der zweiten Endstellung zu überführen, in der alle Anschlüsse des 3/2-Wegeventils durch den Schieber überdeckt werden, und den Schieber zur Kompensation einer Drift des Hubzylinders in dieser Zwischenstellung zu halten. In der alle Anschlüsse überdeckenden Zwischenstellung ist das 3/-2-Wegeventil geschlossen, d.h. eine mittels des Hubzylinders vorgenommene Änderung einer Einstellung des Arbeitsaggregates wird gehalten. Die Ansteuerung des 3/2-Wegeventils zur Überführung in eine Zwischenstellung ermöglicht den Einsatz des 3/2-Wegeventils in Anwendungsfällen, die aufgrund einer dritten Schaltstellung üblicherweise den Einsatz eines leckagefreien 3/3-Wegeventil erforderlich machen. Der Ersatz eines 3/3 Wegeventils durch ein leckagebehaftetes, proportionales 3/2 Wegeventil ist kostengünstiger und reduziert den Bauraumbedarf. Es entfallen dadurch gegenüber dem 3/3-Wegeventil ein Steuermagnet sowie ein Anschluss für dessen elektrische Ansteuerung. Ein weiterer Vorteil ergibt sich daraus, dass bei einem Abschalten einer Stromversorgung der Schieber des 3/2-Wegeventils automatisch in seine erste Endstellung überführt wird, in welcher der Arbeitsanschluss mit dem Entlüftungsanschluss verbunden wird. Dies führt dazu, dass ein durch das 3/2-Wegeventil angesteuerter Hubzylinder eingefahren wird, so dass Korrosion und Beschädigungen an der Kolbenstange vermieden werden können.

Der Steuermagnet des 3/2-Wegeventils wird mittels Pulsweitenmodulation (PWM) angesteuert. Dadurch kann auf eine aufwendigere Stromregelung verzichtet werden. Die Pulsweitenmodulation erfordert lediglich eine Steuerungseinrichtung, mittels der die Parameter Frequenz und Tastverhältnis, d.h. das Verhältnis von Pulsdauer und Periodendauer zueinander, der Pulsweitenmodulation gesteuert bzw. geregelt werden können, um den Schieber in die Zwischenstellung zu überführen.

Dabei kann zur Kompensation einer ungleichmäßigen Überdeckung der Anschlüsse in der Zwischenstellung des Schiebers zumindest ein Parameter der Pulsweitenmodulation in Abhängigkeit von einer Regelgröße des einzustellenden Arbeitsaggregates angepasst werden. In der Zwischenstellung des Schiebers tritt bei ungleichmäßiger Überdeckung der Anschlüsse durch den Schieber aufgrund der unterschiedlichen Druckverhältnisse Leckageströme unterschiedlicher Größenordnung auf, die zu einer Driftbewegung des Hubzylinders führt. Aus dieser Driftbewegung resultiert eine Abweichung der vorgenommenen Einstellung des Betriebsparameters des Arbeitsaggregates. Dieser Driftbewegung des Hubzylinders wird durch die Anpassung zumindest eines der Paramater Frequenz oder Tastverhältnis (Duty-Cycle) in Abhängigkeit von einer Regelgröße des einzustellenden Arbeitsaggregates entgegengewirkt. Dabei nimmt die Anzahl der Nachregelungsschritte, während der der zumindest eine Parameter der Pulsweitenmodulation verändert wird, schnell ab, da bereits nach wenigen Schritten eine im Wesentlichen optimale Zwischenstellung des Schiebers erreicht wird. Ein weiterer Vorteil besteht darin, dass temperaturabhängige Änderungen des Widerstands der Spule des bestromten Steuermagneten oder Änderungen der Druckverhältnisse automatisch kompensiert werden können.

Alternativ kann zur Kompensation der Drift in der Zwischenstellung des Schiebers ein Ansteuerstrom des Steuermagneten iterativ angepasst werden. Hierbei wird ausgehend von einem mittleren Wert für den Ansteuerstrom, dessen Größenordnung eine Magnetkraft im Steuermagneten hervorruft, die zur Überführung des Schiebers in die Zwischenstellung ausreichten ist, der Wert des Ansteuerstroms in Abhängigkeit von einer Regelgröße des einzustellenden Arbeitsaggregates angepasst.

Dabei kann die Anpassung schrittweise oder kontinuierlich durchgeführt werden. Bevorzugt kann als Regelgröße ein Betriebsparameter des Arbeitsaggregates verwendet werden. Zur Anpassung kann bei einer Betriebsparameterverstellung des Arbeitsaggregates die Regelgröße als Rückmeldung für die Anpassung des Tastverhältnisses der Pulsweitenmodulation genutzt werden. Ändert sich die Regelgröße des Arbeitsaggregates obwohl das 3/2-Wegeventil geschlossen sein sollte, d.h. alle Anschlüsse durch den Schieber überdeckt werden, wird das Tastverhältnis solange kontinuierlich oder schrittweise angepasst, bis sich die Regelgröße nicht mehr verändert. Dadurch ergibt sich ein korrigiertes Tastverhältnis für die Zwischenstellung des Schiebers, in der das 3/2-Wegeventil geschlossen ist. Das Tastverhältnis wird also während des Betriebs des Arbeitsaggregates ständig an den aktuellen Spulenwiederstand angepasst. Bei dem Betriebsparameter des Arbeitsaggregates kann es sich um eine Drehzahl, einen Druck oder eine Position handeln. Der als Regelgröße verwendete Betriebsparameter des Arbeitsaggregates kann sensorisch erfasst werden. Da die sensorische Erfassung zumindest eines Betriebsparameters des Arbeitsaggregates zur Überwachung der vorgenommenen Einstellung in der Regel für weitere Steuerungs- oder Regelungsprozesse herangezogen wird, kann somit auf eine bestehende Sensorik zurückgegriffen werden. Zusätzliche Mittel zur Überwachung der Position des Hubzylinders oder des Schiebers des 3/2-Wegeventils sind nicht erforderlich.

Gemäß dem Anspruch 6 wird eine Landwirtschaftliche Arbeitsmaschine ein einstellbares Arbeitsaggregat umfassend vorgeschlagen, wobei zur Einstellung des Arbeitsaggregates mittels eines Hubzylinders ein 3/2-Wegeventil mit einem Schieber und nur einem Steuermagneten vorgesehen ist, dessen Schieber durch Bestromung des nur einen Steuermagneten aus einer ersten Endstellung, in der ein Entlüftungsanschluss mit einem Arbeitsanschluss verbunden ist, in eine zweite Endstellung, in der ein Druckanschluss mit dem Arbeitsanschluss verbunden ist, überführbar ist, wobei durch Ansteuerung der Bestromung des einen Steuermagneten der Schieber in eine Zwischenstellung zwischen der ersten und der zweiten Endstellung überführbar ist, in welcher der Schieber alle Anschlüsse des 3/2-Wegeventils überdeckt und zur Kompensation einer Drift des Hubzylinders in dieser Zwischenstellung haltbar ist. In der Zwischenstellung ist das 3/2-Wegeventil geschlossen, so dass der Hubzylinder in seiner zuletzt eingestellten Position gehalten wird, die mit einer angestrebten Einstellung des Arbeitsaggregates korrespondiert.

Hierzu erfolgt die Ansteuerung der Bestromung des Steuermagneten zur Kompensation der Drift des Hubzylinders durch Pulsweitenmodulation.

Alternativ kann die Ansteuerung des Steuermagneten zur Kompensation der Drift des Hubzylinders durch eine Anpassung eines Ansteuerstroms einer Stromregelung erfolgen.

Weiterhin kann die Zwischenstellung des Schiebers in Abhängigkeit von zumindest einem Betriebsparameter des Arbeitsaggregates nachjustierbar sein.

Dazu kann das Arbeitsaggregat zumindest einen Sensor zur Erfassung eines Signals umfassen, welches den zumindest einen Betriebsparameter des Arbeitsaggregates repräsentiert. Als Sensor kann beispielsweise ein Drehzahlsensor, ein Winkelsensor oder ein Drucksensor vorgesehen sein.

Weiterhin wird gemäß dem Anspruch 10 eine landwirtschaftliche Arbeitsmaschine mit einer Steuerungseinrichtung vorgeschlagen, die dadurch gekennzeichnet ist, dass die Steuerungseinrichtung zur Ansteuerung eines durch ein 3/2-Wegeventil stufenlos einstellbaren Arbeitsaggregates nach einem der Ansprüche 7 bis 11 eingerichtet ist, wobei das 3/2-Wegeventil nach einem Verfahren gemäß einem der Ansprüche 1 bis 6 ansteuerbar ist.

Dabei kann es sich bei dem zumindest einen stufenlos einstellbaren Arbeitsaggregat der landwirtschaftlichen Arbeitsmaschine um ein Arbeitsaggregat handeln, das mittels eines Hubzylinders einstellbar ist, wobei eine zu haltende Einstellung des Arbeitsaggregates diskontinuierlich durchgeführt wird, d.h., dass eine permanente fortlaufende Regelung des Arbeitsaggregates nicht vorgesehen ist. Es wird anhand eines Betriebsparameters der Arbeitsmaschine eine Einstellung des Arbeitsaggregates vorgenommen, die, situationsabhängig, über einen längeren Zeitraum unverändert beibehalten werden kann. So kann es sich bei dem zumindest einen Arbeitsaggregat beispielsweise um einen Variator, einen Gegenmesserkamm einer Häckselvorrichtung, ein Sieb einer Reinigungsvorrichtung oder Leitelemente einer Verteilvorrichtung handeln. Als Betriebsparameter kann die Veränderung einer eingestellten Drehzahl des Variators, die Änderung eines eingestellten Schenkwinkel des Gegenmesserkamms oder der Leitelemente, ein Änderung eines eingestellten Neigungswinkel des Siebs der Reinigungsvorrichtung sowie ein Änderung eines hydraulischen Drucks herangezogen werden, um mittels Anpassung eines Parameters der Pulsweitenmodulation den Schieber des 3/2-Wegeventils in seiner Zwischenstellung zu halten, in welcher alle Anschlüsse des 3/2-Wegeventils überdeckt sind.

Die vorliegende Erfindung wird nachstehend anhand von in den Zeichnungen dargestellten Ausführungsbeispielen näher erläutert.

Es zeigen:
- Fig. 1: eine schematische Darstellung eines 3/2-Wegeventils zur Ansteuerung eines Hubzylinders;
- Fig. 2: einen Verlauf einer Ansteuerkennlinie;
- Fig. 3: eine schematisch in einer Ansicht von unten ein Strohverteiler eines Mähdreschers;
- Fig. 4: eine schematische Ansicht einer Anordnung zur Verstellung eines Gegenmesserkamms einer Häckselvorrichtung eines Mähdreschers.

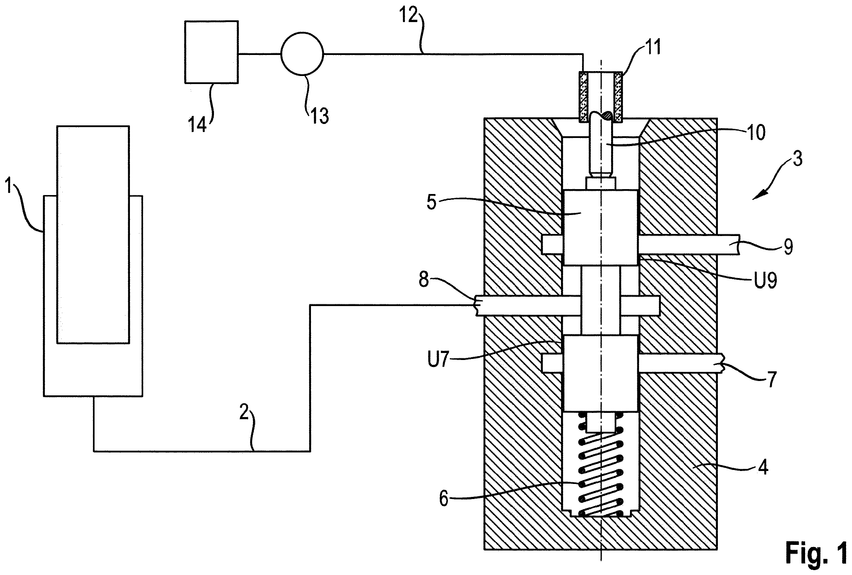

Die Darstellung in Fig. 1 zeigt eine schematische Darstellung eines 3/2-Wegeventils 3 zur Ansteuerung eines Hubzylinders 1. Der Hubzylinder 1 dient der Einstellung eines Arbeitsaggregates einer landwirtschaftlichen Arbeitsmaschine, insbesondere eines Mähdreschers oder Feldhäckslers. Zur Verstellung des Hubzylinders 1 ist dieser durch eine Hydraulikleitung 2 mit einem Arbeitsanschluss 8 des 3/2-Wegeventils 3 verbunden, um diesen mittels eines Hydraulikfluides mit einem Druck zu beaufschlagen.

Das 3/2-Wegeventil 3 umfasst ein Ventilgehäuse 4 mit einem Druckanschluss 7, einem Entlüftungsanschluss 9 sowie dem Arbeitsanschluss 8. Ein in dem Ventilgehäuse 4 angeordneter Schieber 5 ist in Längsrichtung des Ventilgehäuses 4 verschieblich. Der Schieber 5 ist in eine erste Endstellung und eine zweite Endstellung überführbar. In der ersten Endstellung verbindet der Schieber 5 den Entlüftungsanschluss 9 mit dem Arbeitsanschluss 8 fluidleitend, während der Druckanschluss 7 gesperrt ist. In der ersten Endstellung wird der Hubzylinder 1 ganz eingefahren. In der zweiten Endstellung verbindet der Schieber 5 den Druckanschluss 7 mit dem Arbeitsanschluss 8 fluidleitend, während der Entlüftungsanschluss 9 gesperrt ist. In der zweiten Endstellung wird der Hubzylinder 1 vollständig bis auf einen Anschlag ausgefahren. Die Betätigung des 3/2-Wegeventils 3 erfolgt zum einen durch eine Druckfeder 6, welche sich am Boden des Ventilgehäuses 4 und an einem dem Boden zugewandten Endabschnitt des Schiebers 5 abstützt. Zum anderen befindet sich auf der gegenüberliegenden Seite des Schiebers 5 ein Steuerkolben 10, der mittels eines als Elektromagnet ausgebildeten Steuermagneten 11 bei entsprechender Bestromung durch einen Ansteuerstrom entgegen der Federkraft der Druckfeder 6 den Schieber 5 in axialer Richtung bewegt.

Ist der Steuermagnet 11 stromlos, so wird der Schieber 5 durch die Druckfeder 6 automatisch in die zweite Endstellung überführt. Wird der Steuermagnet 12 voll bestromt, so wird der Schieber 5 in die erste Endstellung überführt. Das Umschalten zwischen diesen beiden Endstellungen des 3/2-Wegeventils 3 ermöglicht eine Einstellung des Arbeitsaggregates durch die Beaufschlagung des Hubzylinders 1 mit Druck oder durch dessen Entlüften. Zur Bestromung des Steuermagneten 11 ist dieser durch eine Steuerleitung 12 mit einer Spannungsquelle 13 verbunden. Zur Steuerung bzw. Regelung der Spannungsquelle 13 ist eine Steuerungseinrichtung 14 vorgesehen.

Die Darstellung in Fig. 1 zeigt den Schieber 5 des 3/2-Wegeventils 3 in einer Zwischenstellung. In dieser Zwischenstellung überdeckt der Schieber 5 alle Anschlüsse 7, 8, 9 des 3/2-Wegeventils 3. Durch das Einnehmen der Zwischenstellung des Schiebers 5 wird der Hubzylinder 1 in einer definierten Position zwischen vollständig ausgefahren und ganz eingefahren gehalten, da ein Zu- bzw. Abfluss eines Hydraulikmediums aus dem Hubzylinder 1 über das 3/2-Wegeventil 3 unterbunden wird. Das Einnehmen und das Halten der Zwischenposition des Schiebers 5 werden durch eine Reduzierung des Ansteuerstromes erreicht.

Die Größenordnung des Ansteuerstromes zum Überführen des Schiebers 5 in die Zwischenstellung ist insbesondere vom Betriebszustand des Steuermagneten 11 abhängig. In Abhängigkeit von der Temperatur sowie einer Spulenalterung des Steuermagneten 11 verändert sich die Größenordnung des Ansteuerungsstromes, um den Schieber 5 in die Zwischenstellung zu überführen, in der alle Anschlüsse 7, 8, 9 des 3/2-Wegeventils überdeckt sind. Die Ansteuerung der Bestromung des Steuermagneten 11 erfolgt mittels Pulsweitenmodulation durch die Steuerungseinrichtung 14. Die Bestromung des Steuermagneten 11 erfolgt mit einem konstanten reduzierten Ansteuerstrom, sodass auf eine aufwändige Stromregelung verzichtet werden kann.

Aufgrund von sich im laufenden Betrieb ändernder Temperatur der Spule des Steuermagneten 11 sowie Spulenalterung kann sich bei konstantem, reduziertem Steuerstrom eine Zwischenstellung des Schiebers 5 ergeben, in welcher sich jeweils unterschiedliche Überdeckungen U7 bzw. U9 zwischen dem Schieber 5 und dem Druckanschluss 7 bzw. dem Schieber 5 und dem Entlüftungsanschluss 9 einstellen. Dies führt aufgrund der unterschiedlichen Druckdifferenzen zwischen dem Druckanschluss 7 und dem Arbeitsanschuss 8 bzw. dem Arbeitsanschuss 8 und dem Belüftungsanschluss 9 zu unterschiedlichen Leckageströmen. Dabei kann auch die Situation auftreten, dass aufgrund der Betriebsbedingungen der reduzierte Steuerstrom nicht ausreicht, um den Schieber 5 in ein Zwischenstellung zu überführen, in der alle Anschlüsse 7, 8,9 zumindest überdeckt sind, d.h. dass das 3/2-Wegeventil geschlossen ist.

In dem in Fig. 1 dargestellten Ausführungsbeispiel ist der Druck an dem Druckanschluss 7 größer als an dem Arbeitsanschuss 8. Wegen der größeren Überdeckung U7 ist der Leckagestrom zwischen dem Druckanschluss 7 und dem Arbeitsanschuss 8 als der Leckagestrom zwischen dem Entlüftungsanschluss 9 und dem Arbeitsanschuss 8, zwischen denen die Überdeckung U9 kleiner als U7 ist. Somit strömt das Hydraulikmedium vom Hubzylinder 1 über den Entlüftungsanschluss 9 ab, sodass der Hubzylinder 1 eingefahren wird. Das Einfahren des Hubzylinders 1 führt zu einer ungewollten Veränderung der Einstellung des Arbeitsaggregates.

Um dem entgegenzuwirken, wird durch die Steuerungseinrichtung 14 zumindest ein Parameter der Pulsweitenmodulation, Frequenz und/oder Tastverhältnis (Duty-Cycle), nachgeregelt. Dabei wird bei einer Veränderung der Einstellung eines Arbeitsaggregates, beispielsweise bei einer Positionsverstellung oder einer Drehzahlverstellung, die entsprechende Regelgröße, vorliegend Position bzw. Drehzahl, als Rückmeldung für die Anpassung des Duty-Cycles zur Bestromung des Steuermagneten 11 genutzt. Ändert sich die Regelgröße, obwohl das 3/2-Wegeventil 3 aufgrund der Zwischenstellung des Schiebers 5 geschlossen sein sollte, wird der Duty-Cycle solange kontinuierlich oder schrittweise angepasst, bis sich die Regelgröße nicht mehr verändert. Dadurch ergibt sich ein korrigierter Duty-Cycle für die Zwischenstellung, in der das 3/2-Wegeventil 3 durch Überdeckung aller Anschlüsse 7, 8, 9, durch den Schieber 5 geschlossen ist. Der Duty-Cycle wird also während des Betriebs des 3/2-Wegeventils 3 ständig an den aktuellen Spulenwiederstand angepasst.

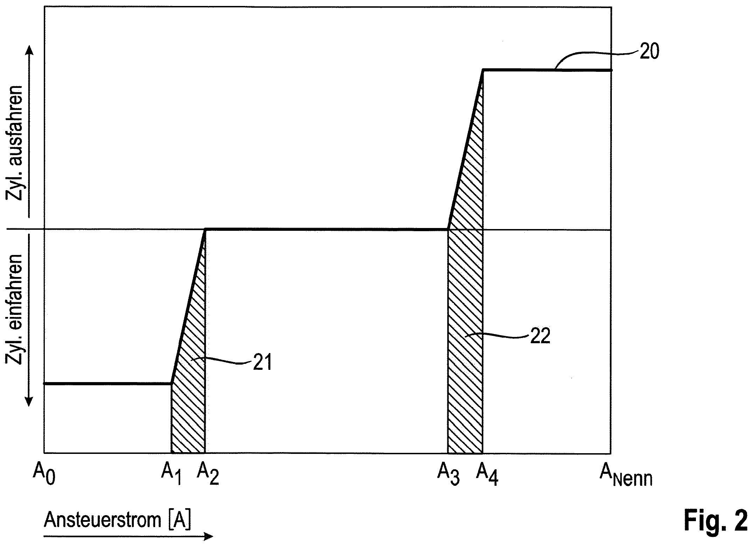

In Fig. 2 ist ein Verlauf einer Ansteuerkennlinie 20 des Steuermagneten 11 dargestellt. Wird die Spule des Steuermagneten 11 mit einem Ansteuerstrom versorgt, dessen Stromstärke zwischen A₀ und A₁ liegt, so befindet sich der Schieber 5 des 3/2-Wegeventils 3 in seiner ersten Endstellung, in der der Hubzylinder 1 vollständig eingefahrenen ist. Wird die Stromstärke des Ansteuerstromes auf einen Wert A₂ erhöht, so wird der Schieber 5 in seine Zwischenstellung überführt, in welcher der Hubzylinder 1 in seiner Position gehalten wird. In einem Bereich der Stromstärke des Ansteuerstromes zwischen A₂ und A₃ ist die erzeugte Magnetkraft des Steuermagneten 11 nicht ausreichend, um den Schieber 5 in seine zweite Endstellung zu überführen, in der der Hubzylinder 1 voll ausgefahren wird. Überschreitet die Stromstärke des Ansteuerstromes einen Wert A₄, so wird der Schieber 5 in seine zweite Endstellung überführt, in welcher der Hubzylinder 1 vollständig ausgefahren ist. Schraffiert dargestellte Flächen 21, 22 unterhalb der Ansteuerkennlinie 20 zwischen A₁ und A₂ beziehungsweise zwischen A₃ und A₄ kennzeichnen die Bereiche, innerhalb derer eine Feinjustierung der Positionierung des Schiebers 5 in der eingenommenen Zwischenstellung durch die Anpassung eines Parameters der Pulsweitenmodulation, insbesondere durch Anpassung des Duty-Cycle, möglich ist, um eine gleichmäßige Überdeckung der Anschlüsse 7, 8, 9 zu erreichen, damit das 3/2-Wegeventil 3 geschlossen ist, so dass der Hubzylinder 1 in seiner zuletzt eingestellten Stellung gehalten wird.

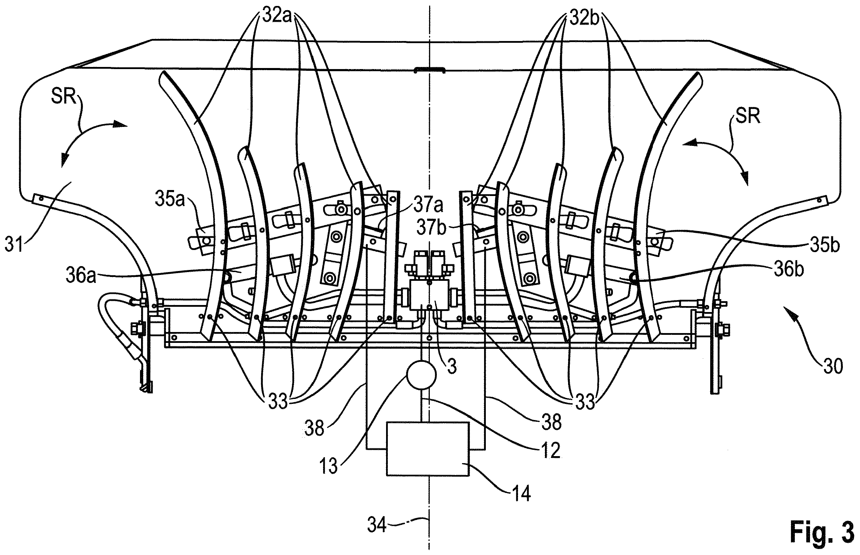

In Fig. 3 ist schematisch in einer Ansicht von unten eine Verteilvorrichtung 30 einer als Mähdrescher ausgebildeten landwirtschaftlichen Arbeitsmaschine dargestellt. Die Verteilvorrichtung 30 umfasst einen Rahmen 31, an welchem mehrere Leitelemente 32a bzw. 32b gruppenweise angeordnet sind, die jeweils um eine Schwenkachse 33 schwenkbar sind. Die Leitelemente 32a und 32b weisen zumindest teilweise einen abschnittsweise gekrümmten bzw. bogenförmigen Verlauf auf. Dabei sind die Leitelemente 32a und 32b bezüglich einer Längsmittelachse 34 des Rahmens 31 spiegelbildlich gruppiert. Mittels jeweils einer nur teilweise dargestellten Hebelanordnung 35a bzw. 35b wird die jeweilige Gruppe von Leitelementen 32a bzw. 32b in einer durch einen Pfeil SR angedeuteten Schwenkrichtung zur Anpassung einer Abgabebreite von gehäckseltem Stroh um die Schwenkachse 33 geschwenkt. Die Betätigung der jeweiligen Hebelanordnung 35a, 35b erfolgt durch jeweils einen hydraulisch betätigten Hubzylinder 36a bzw. 36b, welcher durch das weiter oben bereits beschriebene 3/2-Wegeventil 3 ansteuerbar ist. Das Ein- und Ausfahren der Hubzylinder 36a, 36b bewirkt ein entsprechendes Schwenken der Leitelemente 32a und 32b in Schwenkrichtung SR. Die jeweilige Position der Leitelemente 32a bzw. 32b wird durch den jeweiligen Hebelanordnungen 35a, 35b zugeordnete Sensoren 37a, 37b erfasst und durch Signalleitungen 38 an die Steuerungseinrichtung 14 zur Auswertung übertragen. Aufgrund der Auswertung der Positionssignale erfolgt die Ansteuerung des 3/2-Wegeventils 3 zur Verstellung der Hydraulikzylinder 36a und 36b gemäß dem weiter oben bereits beschriebenen Verfahren, um die Leitelemente 32a, 32b stufenlos in Schwenkrichtung SR um einen vorgebbaren Wert zu verstellen und in dieser Position zu halten.

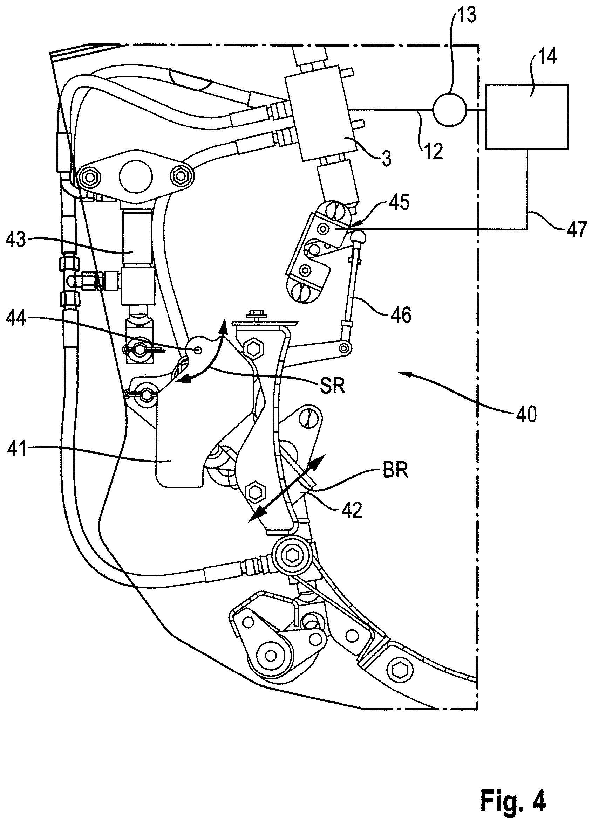

Fig. 4 zeigt eine schematische Ansicht einer Anordnung zur Verstellung eines Gegenmesserkamms 41 einer Häckselvorrichtung 40 der als Mähdrescher ausgebildeten landwirtschaftlichen Arbeitsmaschine. Der Gegenmesserkamm 41 trägt eine Vielzahl an Gegenmessern 42, welche mit auf einer rotierenden Häckseltrommel angeordneten Häckselmessern in Eingriff bringbar sind. Die Position der Gegenmesser 42 ist in radialer Richtung durch die Verstellung des Gegenmesserkamms 41 in der Weise veränderbar, dass die aus einer in den Hüllkreis der rotierenden Häckselmesser reichenden Position stufenlos in eine Position überführbar sind, in der sich die Gegenmesser 42 außerhalb des Hüllkreises befinden. Hierzu ist ein hydraulisch betätigter Hubzylinder 43 vorgesehen, der durch eine nicht näher dargestellte Hebelanordnung mit dem Gegenmesserkamm 41 verbunden ist. Das Einund Ausfahren des Hubzylinders 43 wird von der Hebelanordnung auf den Gegenmesserkamm 41 übertragen und führt zu einer Schwenkbewegung um eine Schwenkachse 44. Die starr an dem Gegenmesserkamm 41 angeordneten Gegenmesser 42 werden aufgrund der Ein- oder Ausfahrbewegung des Hubzylinders 43 durch die Schwenkbewegung des Gegenmesserkamms 41 weiter in den Hüllkreis der Häckselmesser hinein oder aus diesem heraus bewegt, wie durch einen die Bewegungsrichtung wiedergebenden Pfeil BR angedeutet. Zur Überwachung der jeweiligen Position des Gegenmesserkamms 41 ist ein als Potentiometer ausgebildeter Sensor 45 vorgesehen. Der Sensor 45 ist durch ein Gestänge 46 mit dem Gegenmesserkamm 41 verbunden, wodurch dessen Schwenkbewegungen auf den Sensor 45 übertragen werden. Der Sensor 45 steht durch eine Signalleitung 47 mit der Steuerungseinrichtung 14 in Verbindung. Die von dem Sensor 45 erzeugten Signale werden an die Steuerungseinrichtung 14 übertragen und von dieser ausgewertet. In Abhängigkeit von der Auswertung der Signale des Sensors 45 steuert die Steuerungseinrichtung 14 in weiter oben bereits beschriebener Weise das 3/2-Wegeventil 3 an, welches zur Ansteuerung des Hubzylinders 43 vorgesehen ist. Auf diese Weise lässt sich der Gegenmesserkamm 41 stufenlos verstellen und in der eingestellten Position durch die pulsweitenmodulierte Ansteuerung des 3/2-Wegevetiles 3 halten.

Weitere Anwendungsbeispiele für ein durch das erfindungsgemäße Verfahren einstellbare Arbeitsaggregate einer landwirtschaftlichen Arbeitsmaschine sind ein Variator oder ein Sieb einer Reinigungsvorrichtung. Bei einem Sieb einer Reinigungseinrichtung eines Mähdreschers kann bei einer auftretenden Hanglage das Sieb durch mehrere Hubzylinder durch Längs- und/oder Seitenausgleich in einer im Wesentlichen horizontalen Position gehalten werden.

Den vorstehend beschriebenen bzw. aufgelisteten Arbeitsaggregaten der landwirtschaftlichen Arbeitsmaschine ist gemeinsam, dass diese stufenlos verstellbar sind, wobei eine permanente fortlaufende Regelung nicht erforderlich ist.

### Bezugszeichenliste

| | | | |
|---|---|---|---|
| 1 | Hubzylinder | 37a | Sensor |
| 2 | Hydraulikleitung | 37b | Sensor |
| 3 | 3/2-Wegeventil | 38 | Signalleitung |
| 4 | Ventilgehäuse | | |
| 5 | Schieber | 40 | Häckselvorrichtung |
| 6 | Druckfeder | 41 | Gegenmesserkamm |
| 7 | Druckanschluss | 42 | Gegenmesser |
| 8 | Arbeitsanschluss | 43 | Hubzylinder |
| 9 | Entlüftungsanschluss | 44 | Schwenkachse |
| 10 | Steuerkolben | 45 | Sensor |
| 11 | Steuermagnet | 46 | Gestänge |
| 12 | Signalleitung | 47 | Signalleitung |
| 13 | Stromquelle | | |
| 14 | Steuerungseinrichtung | U7 | Überdeckung |
| | | U9 | Überdeckung |
| 20 | Ansteuerkennlinie | SR | Schwenkrichtung |
| 21 | Fläche | BR | Bewegungsrichtung |
| 22 | Fläche | | |
| 30 | Verteilvorrichtung | | |
| 31 | Rahmen | | |
| 32a | Leitelement | | |
| 32b | Leitelement | | |
| 33 | Schwenkachse | | |
| 34 | Längsmittelachse | | |
| 35a | Hebelanordnung | | |
| 35b | Hebelanordnung | | |
| 36a | Hubzylinder | | |
| 36b | Hubzylinder | | |

## Patentansprüche

1. Einstellverfahren eines Arbeitsaggregates (30, 40) einer landwirtschaftlichen Arbeitsmaschine mittels eines Hubzylinders (1, 36a, 36b, 43), der durch ein 3/2-Wegeventil (3) mit einem Schieber (5) und einem Steuermagneten (11) angesteuert wird,
wobei der Schieber (5) durch Bestromung des einen Steuermagneten (11) zwischen einer ersten Endstellung, in der ein Entlüftungsanschluss (9) mit einem Arbeitsanschluss (8) verbunden wird, und einer zweiten Endstellung, in der ein Druckanschluss (7) mit dem Arbeitsanschluss (8) verbunden wird, hinund herbewegt wird, **dadurch gekennzeichnet, dass** der Steuermagnet (11) des 3/2-Wegeventils (3) angesteuert wird, um den Schieber (5) in eine Zwischenstellung zwischen der ersten Endstellung und der zweiten Endstellung zu überführen, in der alle Anschlüsse (7,8, 9) des 3/2-Wegeventils (3) durch den Schieber (5) überdeckt werden, und den Schieber (5) zur Kompensation einer Drift des Hubzylinders (1, 36a, 36b, 43) in seiner Zwischenstellung zu halten, wobei der Steuermagnet (11) des 3/2-Wegeventils mittels Pulsweitenmodulation (PWM) angesteuert wird.

2. Einstellverfahren nach Anspruch 1, **dadurch gekennzeichnet, dass** zur Kompensation einer ungleichmäßigen Überdeckung (U7, U9) der Anschlüsse (7, 9) in der Zwischenstellung des Schiebers (5) Frequenz und/oder Tastverhältnis der Pulsweitenmodulation in Abhängigkeit von einer Regelgröße des einzustellenden Arbeitsaggregates (30, 40) angepasst wird.

3. Einstellverfahren nach Anspruch 1, **dadurch gekennzeichnet, dass** zur Kompensation der Drift in der Zwischenstellung des Schiebers (5) ein Ansteuerstrom des Steuermagneten (11) iterativ angepasst wird.

4. Einstellverfahren nach einem der Ansprüche 1 bis 3, **dadurch gekennzeichnet, dass** die Anpassung schrittweise oder kontinuierlich durchgeführt wird.

5. Einstellverfahren nach einem der vorangehenden Ansprüche, **dadurch gekennzeichnet, dass** als Regelgröße ein Betriebsparameter des Arbeitsaggregates (30, 40) verwendet wird.

6. Landwirtschaftliche Arbeitsmaschine ein einstellbares Arbeitsaggregat (30,40) umfassend, wobei die Einstellung des Arbeitsaggregates (30, 40) mittels eines Hubzylinders (1, 36a, 36b, 43) erfolgt und wobei dem Hubzylinder (1, 36a, 36b, 43) ein 3/2-Wegeventil mit einem Schieber (5) und nur einem Steuermagneten (11) zugeordnet ist, dessen Schieber (5) durch Bestromung des nur einen Steuermagneten (11) aus einer ersten Endstellung, in der ein Entlüftungsanschluss (9) mit einem Arbeitsanschluss (8) verbunden ist, in eine zweite Endstellung, in der ein Druckanschluss (7) mit dem Arbeitsanschluss (8) verbunden ist, überführbar ist, **dadurch gekennzeichnet, dass** durch Ansteuerung der Bestromung des einen Steuermagneten (11) der Schieber (5) in eine Zwischenstellung zwischen der ersten und der zweiten Endstellung überführbar ist, in welcher der Schieber (5) alle Anschlüsse des 3/2-Wegeventils (7, 8, 9) überdeckt, und durch Kompensation einer Drift des Hubzylinders (1, 36a, 36b, 43) in dieser Zwischenstellung haltbar ist, wobei die Ansteuerung des Steuermagneten (11) zur Kompensation der Drift des Hubzylinders (1, 36a, 36b, 43) durch Pulsweitenmodulation erfolgt..

7. Landwirtschaftliche Arbeitsmaschine nach Anspruch 6, **dadurch gekennzeichnet, dass** die Ansteuerung des Steuermagneten (11) zur Kompensation der Drift des Hubzylinders (1, 36a, 36b, 43) durch eine Anpassung eines Ansteuerstroms einer Stromregelung erfolgt.

8. Landwirtschaftliche Arbeitsmaschine nach einem der Ansprüche 6 bis 7, **dadurch gekennzeichnet, dass** die Zwischenstellung des Schiebers (5) in Abhängigkeit von zumindest einem Betriebsparameter des Arbeitsaggregates (30, 40) nachjustierbar ist.

9. Landwirtschaftliche Arbeitsmaschine nach Anspruch 8, **dadurch gekennzeichnet, dass** das Arbeitsaggregat (30. 40) zumindest einen Sensor (37a, 37b, 45) zur Erfassung eines Signals umfasst, welches den zumindest einen Betriebsparameter des Arbeitsaggregates (30, 40) repräsentiert.

10. Landwirtschaftliche Arbeitsmaschine mit einer Steuerungseinrichtung (14), **dadurch gekennzeichnet, dass** die Steuerungseinrichtung (14) zur Ansteuerung eines durch ein 3/2-Wegeventil (3) stufenlos verstellbaren Arbeitsaggregates (30, 40) nach einem der Ansprüche 6 bis 9 eingerichtet ist, wobei das 3/2-Wegeventil (3) nach einem Verfahren gemäß einem der Ansprüche 1 bis 5 ansteuerbar ist.

11. Landwirtschaftliche Arbeitsmaschine nach Anspruch 10, **dadurch gekennzeichnet, dass** es sich bei dem Arbeitsaggregat (30, 40) um einen Variator, einen Gegenmesserkamm (41) einer Häckselvorrichtung (40), ein Sieb einer Reinigungsvorrichtung oder Leitelemente (32a, 32b) einer Verteilvorrichtung (30) handelt.

## Claims

1. A method for adjusting a working assembly (30, 40) of an agricultural working machine by means of a lifting cylinder (1, 36a, 36b, 43) which is controlled by a 3/2 directional control valve (3) with a valve slide (5) and one solenoid (11),
wherein the valve slide (5) is moved backwards and forwards by energizing the one solenoid (11) between a first end position in which a bleed port (9) is connected to a working port (8) and a second end position in which a pressure port (7) is connected to the working port (8), **characterized in that** the solenoid (11) of the 3/2 directional control valve (3) is controlled in order to transpose the valve slide (5) into an intermediate position between the first end position and the second end position in which all of the ports (7, 8, 9) of the 3/2 directional control valve (3) are covered over by the valve slide (5) and to hold the valve slide (5) in its intermediate position in order to compensate for a drift of the lifting cylinder (1, 36a, 36b, 43), wherein the solenoid (11) of the 3/2 directional control valve is controlled by means of pulse width modulation (PWM).

2. The adjustment method according to claim 1, **characterized in that** in order to compensate for an uneven coverage (U7, U9) of the ports (7, 9) in the intermediate position of the valve slide (5), the frequency and/or duty cycle of the pulse width modulation is modulated as a function of a control variable of the working assembly (30, 40) to be adjusted.

3. The adjustment method according to claim 1, **characterized in that** in order to compensate for the drift in the intermediate position of the valve slide (5), a control current of the solenoid (11) is modulated iteratively.

4. The adjustment method according to one of claims 1 to 3, **characterized in that** the modulation is carried out stepwise or continuously.

5. The adjustment method according to one of the preceding claims, **characterized in that** an operating parameter of the working assembly (30, 40) is used as the control variable.

6. An agricultural working machine comprising an adjustable working assembly (30, 40), wherein the adjustment of the working assembly (30, 40) is carried out by means of a lifting cylinder (1, 36a, 36b, 43) and wherein a 3/2 directional control valve with a valve slide (5) and only one solenoid (11) is associated with the lifting cylinder (1, 36a, 36b, 43), the valve slide (5) being capable of being transposed from a first end position in which a bleed port (9) is connected to a working port (8) into a second end position in which a pressure port (7) is connected to the working port (8) by energizing the only one solenoid (11), **characterized in that** by controlling the energization of the one solenoid (11), the valve slide (5) can be transposed into an intermediate position between the first and the second end position in which the valve slide (5) covers over all of the ports (7, 8, 9) of the 3/2 directional control valve and can be held in this intermediate position by compensating for a drift of the lifting cylinder (1, 36a, 36b, 43), wherein, in order to compensate for the drift of the lifting cylinder (1, 36a, 36b, 43), the control of the solenoid (11) is carried out by pulse width modulation.

7. The agricultural working machine according to claim 6, **characterized in that** the control of the solenoid (11) in order to compensate for the drift of the lifting cylinder (1, 36a, 36b, 43) is carried out by modulation of a control current of a current controller.

8. The agricultural working machine according to one of claims 6 to 7, **characterized in that** the intermediate position of the valve slide (5) can be readjusted as a function of at least one operating parameter of the working assembly (30, 40).

9. The agricultural working machine according to claim 8,
**characterized in that** the working assembly (30, 40) comprises at least one sensor (37a, 37b, 45) for detecting a signal which represents the at least one operating parameter of the working assembly (30, 40).

10. An agricultural working machine with a control device (14), **characterized in that** the control device (14) is configured to control a working assembly (30, 40) according to one of claims 6 to 9 which can be continuously adjusted by controlling a 3/2 directional control valve (3), wherein the 3/2 directional control valve (3) can be controlled in accordance with a method according to one of claims 1 to 5.

11. The agricultural working machine according to claim 10,
**characterized in that** the working assembly (30, 40) is a variable speed transmission, a stationary cutting comb (41) of a chopping device (40), a sieve of a cleaning device or guide elements (32a, 32b) of a spreading device (30).

## Revendications

1. Procédé de réglage d'un organe de travail (30, 40) d'une machine de travail agricole au moyen d'un vérin de levage (1, 36a, 36b, 43) qui est commandé par l'intermédiaire d'une valve directionnelle à 3 voies/2 positions (3) comprenant un tiroir (5) et un aimant de commande (11),
le tiroir (5) étant déplacé en va-et-vient, par alimentation électrique du un aimant de commande (11), entre une première position extrême, dans laquelle un raccord de purge d'air (9) est relié à un raccord de travail (8), et une seconde position extrême dans laquelle un raccord de pression (7) est relié au raccord de travail (8), **caractérisé en ce que** l'aimant de travail (11) de la valve directionnelle à 3 voies/2 positions (3) est commandé pour transférer le tiroir (5) dans une position intermédiaire entre la première position extrême et la seconde position extrême, dans laquelle tous les raccords (7, 8, 9) de la valve directionnelle à 3 voies/2 positions (3) sont recouverts par le tiroir (5), et pour maintenir le tiroir (5) dans sa position intermédiaire afin de compenser une dérive du vérin de levage (1, 36a, 36b, 43), l'aimant de travail (11) de la valve directionnelle à 3 voies/2 positions étant commandé au moyen d'une modulation de largeur d'impulsions (PWM).

2. Procédé de réglage selon la revendication 1, **caractérisé en ce que**, pour compenser un recouvrement inégal (U7, U9) des raccords (7, 9) dans la position intermédiaire du tiroir (5), la fréquence et/ou le rapport cyclique de la modulation de largeur d'impulsions est adapté en fonction d'une grandeur de régulation de l'organe de travail (30, 40) à régler.

3. Procédé de réglage selon la revendication 1, **caractérisé en ce que**, pour compenser la dérive dans la position intermédiaire du tiroir (5), un courant de commande de l'aimant de travail (11) est adapté de manière itérative.

4. Procédé de réglage selon une des revendications 1 à 3, **caractérisé en ce que** l'adaptation est effectuée pas à pas ou en continu.

5. Procédé de réglage selon une des revendications précédentes, **caractérisé en ce que**, comme grandeur de régulation, un paramètre de fonctionnement de l'organe de travail (30, 40) est utilisé.

6. Machine de travail agricole incluant un organe de travail réglable (30, 40), le réglage de l'organe de travail (30, 40) s'effectuant au moyen d'un vérin de levage (1, 36a, 36b, 43), et au vérin de levage (1, 36a, 36b, 43) étant associée une valve directionnelle à 3 voies/2 positions comprenant un tiroir (5) et seulement un aimant de commande (11), dont le tiroir (5) est transférable, par alimentation électrique du seulement un aimant de commande (11), d'une première position extrême, dans laquelle un raccord de purge d'air (9) est relié à un raccord de travail (8), à une seconde position extrême dans laquelle un raccord de pression (7) est relié au raccord de travail (8), **caractérisée en ce que,** par l'intermédiaire de la commande de l'alimentation électrique du un aimant de commande (11), le tiroir (5) est transférable dans une position intermédiaire entre la première et la seconde position extrême, dans laquelle le tiroir (5) recouvre tous les raccords de la valve directionnelle à 3 voies/2 positions (7, 8, 9) et peut être maintenu dans cette position intermédiaire par la compensation de la dérive du vérin de levage (1, 36a, 36b, 43), la commande de l'aimant de travail (11) pour compenser la dérive du vérin de levage (1, 36a, 36b, 43) s'effectuant par modulation de largeur d'impulsions.

7. Machine de travail agricole selon la revendication 6, **caractérisée en ce que** la commande de l'aimant de travail (11) pour compenser la dérive du vérin de levage (1, 36a, 36b, 43) s'effectue par l'intermédiaire d'une adaptation d'un courant de commande d'une régulation de courant.

8. Machine de travail agricole selon une des revendications 6 à 7, **caractérisée en ce que** la position intermédiaire du tiroir (5) est réajustable en fonction d'au moins un paramètre de fonctionnement de l'organe de travail (30, 40) .

9. Machine de travail agricole selon la revendication 8, **caractérisée en ce que** l'organe de travail (30, 40) inclut au moins un capteur (37a, 37b, 45) pour détecter un signal, lequel représente le au moins un paramètre de fonctionnement de l'organe de travail (30, 40).

10. Machine de travail agricole comprenant un équipement de commande (14), **caractérisée en ce que** l'équipement de commande (14) est conçu selon une des revendications 6 à 9 pour commander un organe de travail (30, 40) réglable progressivement par l'intermédiaire d'une valve directionnelle à 3 voies/2 positions (3), la valve directionnelle à 3 voies/2 positions (3) étant commandable conformément à un procédé selon une des revendications 1 à 5.

11. Machine de travail agricole selon la revendication 10, **caractérisée en ce qu'**il s'agit, dans le cas de l'organe de travail (30, 40), d'un variateur, d'un peigne de contrecouteaux (41) d'un dispositif de hachage (40), d'une grille d'un dispositif de nettoyage ou d'éléments de guidage (32a, 32b) d'un dispositif d'épandage (30) .
